Europäisches Patentamt

European Patent Office

Office européen des brevets

(11) Veröffentlichungsnummer: **0 027 650**
**A1**

## (12) EUROPÄISCHE PATENTANMELDUNG

(21) Anmeldenummer: 80106340.5

(22) Anmeldetag: 17.10.80

(51) Int. Cl.³: **H 01 G 13/00**
**H 01 G 4/30**

(30) Priorität: 23.10.79 DE 2942776

(43) Veröffentlichungstag der Anmeldung:
29.04.81 Patentblatt 81/17

(84) Benannte Vertragsstaaten:
FR GB IT SE

(71) Anmelder: **SIEMENS AKTIENGESELLSCHAFT Berlin
und München**
**Postfach 22 02 61**
**D-8000 München 22(DE)**

(72) Erfinder: **Kessler, Hartmut, Dipl.-Ing.**
**Kurt-Schumacher Strasse 5b**
**D-8400 Regensburg(DE)**

(54) Verfahren zur Herstellung von elektrischen Schichtkondensatoren.

(57) Die Herstellung von Schichtkondensatoren wird rationalisiert, indem beim Übereinanderwickeln mehrerer Mutterkondensatoren auf eine Trommel mit großem Durchmesser zwischen die einzelnen Mutterkondensatoren Trennlagen (7) derart eingewickelt werden, daß sie über den Bereich der Dielektrikumsfolien (6) nur um den Betrag der Dicke der Stirnkontaktschicht (3) vorstehen. Nach dem Stirnkontaktieren werden die Kanten (9) der Trennfolien (7) mit dem daran anhaftenden Kontaktmetall abgetragen.

FIG 2

EP 0 027 650 A1

SIEMENS AKTIENGESELLSCHAFT  Unser Zeichen
Berlin und München  VPA 79 P 1 1 7 9 EUR

Verfahren zur Herstellung von elektrischen Schichtkondensatoren.

Die vorliegende Erfindung betrifft ein Verfahren zur Herstellung von elektrischen Schichtkondensatoren, bei dem auf einer Trommel mit großem Durchmesser mehrere übereinander liegende ringförmige Mutterkondensatoren gebildet und diese anschließend in Einzelkondensatoren zertrennt werden, wobei metallisierte Dielektrikumsfolien aus Kunststoff von der im Kondensator benötigten Breite zu einem Mutterwickel und auf diesen Mutterwickel Trennfolien gewickelt werden, welche über den kapazitiv wirksamen Bereich des Kondensators vorstehen, wobei auf diese die metallisierten Dielektrikumsfolien und die Trennfolien für den jeweils nächsten Mutterkondensator aufgewickelt werden, bei dem auf die Stirnflächen des so entstandenen Ausgangswickels Spritzmetallschichten ganzflächig aufgespritzt werden, bei dem die Kanten der Trennfolien mit den daran anhaftenden Wülsten aus Spritzmetall entfernt und der Ausgangswickel entlang den Trennfolien in die Mutterkondensatoren und diese in Einzelkondensatoren zertrennt werden.

Mhs 1 Lk / 16.10.1979

Ein derartiges Verfahren ist aus der DE-PS 17 64 541 bekannt. Gemäß dieser Patentschrift werden über die Spritzmetallschichten vorstehende Trennfolien verwendet. Diese Trennfolien sollen soweit vorstehen, daß sie von der Spritzmetallschicht nicht umfaßt werden. Dadurch ist es möglich, die übereinander gewickelten Mutterkondensatoren nach einem Auftrennen des Ausgangskondensators in radialer Richtung ohne weiteres voneinander zu trennen.

Aus der DE-PS 26 43 087 ist es bekannt, Trennfolien, die über die beiden Stirnseiten eines ähnlichen Ausgangskondensators vorstehen und aus Kunststoff bestehen, mit dem kapazitiv wirksamen Teil des Kondensators zu verkleben und vor dem Auftrennen des Ausgangskondensators in die einzelnen Mutterkondensatoren die überstehenden Teile dieser Trennfolien abzuschleifen.

Es hat sich jedoch herausgestellt, daß bei diesen beiden bekannten Verfahren eine sogenannte Abschattung eintritt. Abschattung bedeutet, daß durch die vorstehenden Trennfolien beim Aufspritzen des Spritzmetalls so viele Metallpartikel abgefangen werden, daß sich ein pilzkopfähnlicher Metallniederschlag an den Kanten der Trennfolien bildet. Dadurch wird das direkte Auftreffen der Metallteilchen in der unmittelbaren Nähe der Trennfolien verhindert. Es bildet sich eine Zone aus, in welcher die Spritzmetallschicht nur aus lose aneinanderhängenden Metallteilchen besteht, da diese Metallteilchen nur nach einer Ablenkung und daher schon relativ kalt auf die Stirnfläche der entsprechenden Mutterkondensatoren gelangen. Wie sich weiter herausgestellt hat, bewirkt diese Abschattung, daß die äußersten Folienlagen der von derartigen Mutterkondensatoren abgetrennten Einzelkondensatoren nicht ausreichend am Kondensator haften, insbesondere wenn die heute üblichen sehr dünnen Kondensator- bzw. Deckfolien verwendet werden sollen.

Die Aufgabe, die der vorliegenden Erfindung zugrundeliegt,
besteht bei einem Verfahren der eingangs beschriebenen
Art darin, daß eine Abschattung soweit vermieden wird,
daß auch die zu den Trennfolien unmittelbar benachbarten
Folien von den Spritzmetallschichten sicher erfaßt, mechanisch gehalten und ggf. elektrisch einwandfrei kontaktiert werden, und zwar auch nach dem Zertrennen der Mutterkondensatoren in Einzelkondensatoren.

Diese Aufgabe wird erfindungsgemäß dadurch gelöst, daß
die Trennfolien nur etwa um den Betrag der Schichtdicke
der aufzubringenden Spritzmetallschichten über die Dielektrikumsfolien vorstehend aufgewickelt werden und daß die
Kanten der Trennfolien mit den darauf befindlichen Wülsten aus Spritzmetall mittels eines für die Metallbearbeitung üblichen spanabhebenden Werkzeuges abgetragen
werden.

Die Spritzmetallschichten, die vorzugsweise durch das
Schoop'sche Flammspritzverfahren aufgebracht werden, bilden im Bereich der erfindungsgemäß ausgebildeten Trennfolien nur jeweils einen Wulst, die Festigkeit der Spritzmetallschichten bleibt bis unmittelbar an die Trennfolien
heran erhalten. Es bildet sich auch nicht etwa eine brüchige Zone unterhalb der Kanten der Trennfolien aus, was
aufgrund der Beobachtung der pilzkopfähnlichen Materialansammlungen beim Verfahren gemäß dem Stand der Technik
hätte erwartet werden können. Die Erfindung hat den Vorteil, daß relativ dünne Trennfolien verwendet werden können, da die nur wenig überstehenden Randbereiche der
Trennfolien der Biegebeanspruchung beim Metallaufspritzen
sehr viel leichter standhalten können, als die nach dem
Stand der Technik weiter hervorstehenden Trennfolien.
Ein Umbiegen der Trennfolien würde zu einem Abdecken
eines erheblichen Randbereiches der Kondensatoren führen, insbesondere da die Schichtkondensatoren häufig sehr kleine Abmessungen aufweisen. Die erfindungsgemäß schmalen Randbereiche der Trennfolien werden außerdem durch das aufgespritzte Metall sehr bald zusätzlich gestützt, wodurch die Gefahr des Umbiegens überproportional reduziert wird.

Beim Stand der Technik wird durch die Abschattung bedingt eine relativ dicke Schicht aus Deckfolien und Trennfolien eingewickelt. Diese Schicht wird durch die nachfolgenden Windungen der metallisierten Kunststoffolie allmählich fest und fester an die Unterlage angepreßt. Die Randbereiche der Trennfolie werden dabei wellig verformt, da die durch das Zusammenpressen überflüssige Länge eine Verformung der Trennfolie bewirkt. Dadurch ergibt sich eine zusätzliche Tendenz zum Umbiegen der Trennfolien.

Das Abtragen der überstehenden Wülste der Spritzmetallschichten sowie der Kanten der Trennfolien kann vorteilhaft durch Feilen, Fräsen, Schleifen erfolgen.

Vorteilhaft wird das Verfahren so ausgeführt, daß die Stirnkontaktschichten auf dem Ausgangswickel bis auf ihre Oberfläche im Bereich der Dielektrikumsfolien abgetragen werden. Werden als Trennfolien Stahlbänder vorgesehen, so werden diese vorteilhaft als Anschlag zur Begrenzung für das Abtragen der Stirnkontaktschicht eingesetzt. Besonders wenig aufwendig ist der Einsatz von Trennfolien aus Kunststoff, insbesondere aus Celluloseacetobutyrat (Handelsname Triafol BN) und Celluloseacetat (Triafol TN).

Eine Kunststoffolie von nur etwa 50 $\mu$m Stärke reicht als Trennfolie aus, wenn nur eine Lage der Trennfolie eingewickelt werden soll. Hierfür müßten nach dem Stand der Technik 100 $\mu$m starke Kunststoffolien verwendet werden.

Für relativ breite Mutterkondensatoren werden vorteilhaft Trennlagen aus Hartpapier eingesetzt, da diese relativ steif sind, daher eine genaue Führung zulassen, und keine Gefahr bei der Handhabung mit sich bringen, wie relativ breite Stahlfolien.

Vorteilhaft stehen die Trennfolien beidseitig etwa 0,7mm über den Bereich der Dielektrikumsfolien des Kondensators über.

Das vorgeschlagene Verfahren zur Entfernung der Wülste wird vorteilhaft so ausgeführt, daß der Ausgangswickel in Rotation um seine Achse versetzt wird und daß eine vorn aufgebogene Raspel oder Feile so lange gegen die Stirnfläche des Ausgangswickels gepreßt wird, bis die Metallrücken über den Trennfolien abgetragen sind.

Nach dem vorgeschlagenen Verfahren hergestellte Kondensatoren weisen vorteilhaft Deckpakete von vier Lagen einer 10µm starken Deckfolie auf. Diese geringe Lagenzahl und diese geringe Stärke der Deckfolien reicht zum Schutz des Kondensators aus, da kein Abblättern der außen liegenden Deckfolien zu erwarten ist. Je nach Anforderung sind ohne eine zusätzliche Umhüllung zwei bis sechs Deckfolien ausreichend. Eine der Deckfolien wird zweckmäßig mit den Kondensatorwerten so bedruckt, daß die Schrift durch zumindest eine darüberliegende Decklage geschützt ist. Eine zusätzliche Verklebung der Deckfolien ist möglich, aber für normale Anforderungen nicht erforderlich. Werden mehrere Deckfolien verwendet, so können diese vorteilhaft gegeneinander versetzt gewickelt werden.

Die Erfindung wird nun anhand von zwei Figuren näher erläutert. Sie ist nicht auf das in den Figuren gezeigte Beispiel beschränkt.

Fig. 1 zeigt einen Ausgangswickel mit einer Trennlage, die gemäß dem Stand der Technik über die Spritzmetallschicht vorsteht und eine pilzförmige Ansammlung von Spritzmetall aufweist, in teilweise geschnittener und gebrochener Ansicht.

Fig. 2 zeigt die erfindungsgemäß nicht über die Spritzmetallschichten vorstehenden Trennlagen in teilweise geschnittener und gebrochener Ansicht.

Die pilzartigen Materialansammlungen 1, die sich beim Verfahren gemäß dem Stand der Technik an den Trennfolien 2 bilden, rufen eine Abschattung beim Aufspritzen der Spritzmetallschichten 3 hervor. Infolge der Abschattung bildet sich in der Nähe der Trennfolien 2 eine Ansammlung 4 lockerer Metallteilchen, welche keine für die mechanische Halterung und die Kontaktierung von Deckfolien 5 bzw. metallisierten Dielektrikumsfolien 6 ausreichende Festigkeit besitzt. Dementsprechend müssen nach dem Stand der Technik so viele Lagen von Deckfolien 5 aufgebracht werden, daß auch beim Abblättern von Deckfolien 5 am Einzelkondensator noch die für den Schutz des Kondensators ausreichende Zahl von Deckfolien verbleibt.

Werden für die metallisierten Dielektrikumsfolien 6 die heutzutage üblichen dünnen Kunststoffolien verwendet, so dürfen diese nach dem Stand der Technik nicht bis an die Trennfolie heranreichen, es sei denn, die Folien werden miteinander verklebt, da sonst durch deren Abblättern eine unzulässige Kapazitätsänderung erfolgt; beim Einsatz des vorgeschlagenen Verfahrens tritt dieser Nachteil nicht auf.

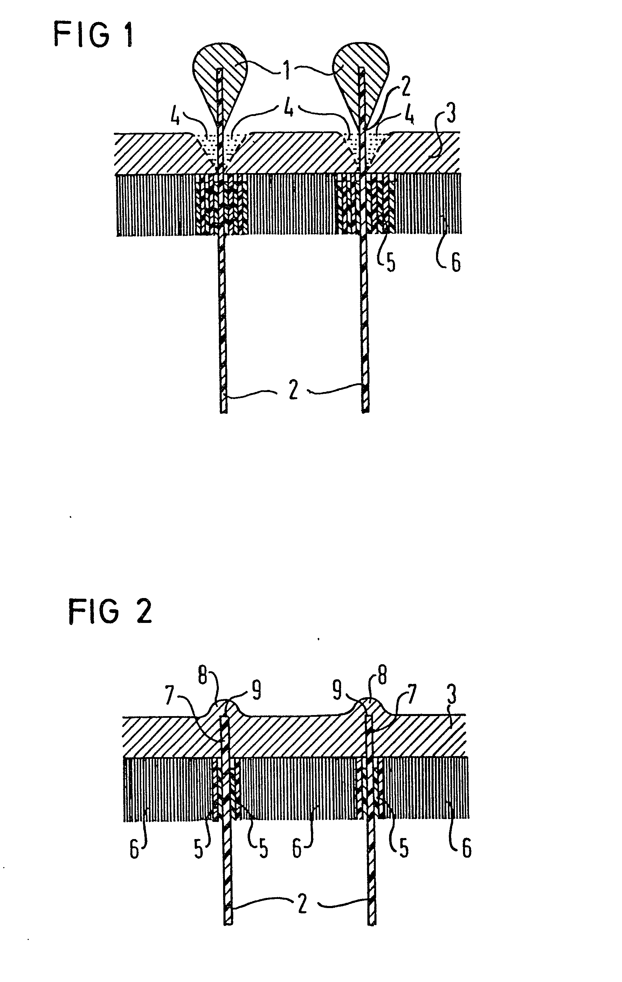

Fig. 2 zeigt einen Ausschnitt aus einem erfindungsgemäßen Ausgangswickel. Die Trennfolien 7 reichen nur um den Betrag der Dicke der Spritzmetallschicht 3 über die metallisierten Folien 6 hinaus. Die Materialansammlungen an den Kanten 9 der Trennfolien 7 bilden lediglich Wülste 8, welche nahtlos in die Schoopschichten 3 übergehen. Materialansammlungen von lockeren Spritzmetall entstehen nicht. Vielmehr bildet sich eine einheitliche Spritzmetallschicht aus, welche bis unmittelbar an die Trennfolien heran eine gleichmäßige Festigkeit aufweist.

Die Wülste 8 werden durch eine spanabhebende Verformung abgetragen, bis die Kanten 9 der Trennfolien 7 freiliegen. Die spanabhebende Verformung kann z.B. durch Abschleifen, Abfeilen, Abfräsen erfolgen. Vorteilhaft wird hierzu der Ausgangswickel in eine Drehung um seine Achse versetzt und eine Feile oder Raspel auf die Wülste 8 aufgedrückt. Die Drehbewegung erfolgt in diesem Fall senkrecht zur Bildebene der Figur 2. Die Feile oder Raspel ist vorteilhaft vorn aufgebogen, so daß eine gleichmäßige, kontinuierliche Bearbeitung gewährleistet ist.

Die Lagenzahl der Deckfolien 5 ist nur durch die Erfordernisse am Einzelkondensator bestimmt. Beispielsweise reichen zwei Deckfolien von nur 10 μm Stärke zum Schutz des Kondensators aus und werden durch die Spritzmetallschicht einwandfrei gehalten. Die Spritzmetallschicht wird zweckmäßig mittels dem Schoop'schen Flammspritzverfahren aufgebracht. Soll der Kondensator anschließend umhüllt werden, so können die Deckfolien ganz entfallen und die metallisierten Dielektrikumsfolien 6 bis an die Trennfolien 7 heranreichen.

10 Patentansprüche
2 Figuren

Patentansprüche

1. Verfahren zur Herstellung von elektrischen Schichtkondensatoren, bei dem auf einer Trommel mit großem Durchmesser mehrere aufeinander liegende ringförmige Mutterkondensatoren gebildet und anschließend in Einzelkondensatoren zertrennt werden, wobei metallisierte Die-lektrikumsfolien aus Kunststoff von der im Kondensator benötigten Breite zu einem Mutterwickel und auf diesen Mutterwickel Trennfolien gewickelt werden, welche über den kapazitiv wirksamen Bereich des Kondensators vorstehen, und bei dem auf diese die metallisierten Dielektrikumsfolien für den jeweils nächsten Mutterkondensator aufgewickelt werden, bei dem auf die Stirnflächen des so entstandenen Ausgangswickels Metall ganzflächig aufgespritzt wird, bei dem die Kanten der Trennfolien mit dem daran anhaftenden Spritzmetall entfernt werden und der Ausgangswickel entlang den Trennfolien in die Mutterkondensatoren und diese in Einzelkondensatoren zertrennt werden, d a d u r c h   g e k e n n z e i c h n e t, daß die Trennfolien (7) nur etwa um den Betrag der Schichtdicke der aufzubringenden Spritzmetallschichten (3) über die Dielektrikumsfolien vorstehend aufgewickelt werden und daß die Kanten (9) der Trennfolien (7) mit den darauf befindlichen Wülsten (8) aus Spritzmetall mittels eines für Metallbearbeitung üblichen spanabhebenden Werkzeuges abgetragen werden.

2. Verfahren nach Anspruch 1, d a d u r c h   g e k e n n -z e i c h n e t,  daß die Stirnkontaktschichten (3) auf dem Ausgangswickel bis auf ihre Oberfläche im Bereich der kapazitiv wirksamen Folien (6) abgetragen werden.

3. Verfahren nach einem der Ansprüche 1 oder 2,  d a - d u r c h   g e k e n n z e i c h n e t,  daß als Trenn-

folien (7) Stahlbänder eingesetzt werden und daß die daraus gebildeten Trennlagen als Anschlag zur Begrenzung für das Abtragen der Stirnkontaktschichten dienen.

4. Verfahren nach einem der Ansprüche 1 oder 2, d a d u r c h g e k e n n z e i c h n e t, daß Trennfolien aus Kunststoff eingesetzt werden.

5. Verfahren nach Anspruch 4, d a d u r c h g e k e n n z e i c h n e t, daß Trennfolien aus Celluloseacetobutyrat oder Celluloseacetat eingesetzt werden.

6. Verfahren nach einem der Ansprüche 1 oder 2, d a d u r c h g e k e n n z e i c h n e t, daß Trennfolien aus Hartpapier verwendet werden.

7. Verfahren nach einem der Ansprüche 4 oder 5, d a d u r c h g e k e n n z e i c h n e t, daß eine nur etwa 50μm starke Trennfolie verwendet wird und daß diese in nur einer Lage eingewickelt wird.

8. Verfahren nach einem der Ansprüche 1 bis 7, d a d u r c h g e k e n n z e i c h n e t, daß die Trennlagen beiderseits um etwa 0,7mm über den Bereich der Dielektrikumsfolien überstehend eingewickelt werden.

9. Verfahren nach einem der Ansprüche 1 bis 8, d a d u r c h g e k e n n z e i c h n e t, daß der Ausgangswickel in Rotation um seine Achse versetzt wird und daß eine Raspel oder Feile solange gegen die Stirnflächen des Ausgangswickels gepreßt wird, bis die Metallwülste über den Trennlagen abgetragen sind.

10. Nach einem Verfahren gemäß einem der Ansprüche 1 bis 9 hergestellter Kondensator, g e k e n n z e i c h n e t

d u r c h   ein Deckpaket von höchstens sechs Lagen
einer 10 µm starken Deckfolie.

FIG 1

FIG 2

**Europäisches Patentamt**

# EUROPÄISCHER RECHERCHENBERICHT

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| A | DE - A - 1 764 541 (SIEMENS AG) <br> * Seite 9, Zeilen 6-18; Ansprüche; Figuren 1-4 * <br><br> -- | 1,4 | H 01 G 13/00 <br> 4/30 |
| D | DE - B - 2 643 087 (SIEMENS AG) <br> * Ansprüche; Figur 1 * <br><br> -- | 1 | |
| A | DE - A - 2 424 368 (SIEMENS AG) <br> * Seite 3, Zeilen 1-17; Ansprüche; Figuren 1-4 * <br><br> ---- | 1,3 | **RECHERCHIERTE SACHGEBIETE (Int. Cl.³)** <br><br> H 01 G 13/00 <br> 4/30 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-01-1981 | VAN REETH |

EPA form 1503.1  06.78